# EUROPÄISCHE PATENTSCHRIFT

(11) **EP 1 973 766 B1**
(45) Veröffentlichungstag und Bekanntmachung des Hinweises auf die Patenterteilung: **15.07.2009**
(21) Anmeldenummer: 06841097.6
(22) Anmeldetag: 21.12.2006
(51) Int. Cl.: B60R 21/213, B60R 21/235

(54) **LUFTSACK, UND VERFAHREN ZUM HERSTELLEN EINES GEWEBES FÜR EINEN LUFTSACK**
AIRBAG AND METHOD FOR MANUFACTURING A FABRIC FOR AN AIRBAG
COUSSIN GONFLABLE DE SECURITE ET PROCEDE DE FABRICATION D'UN TISSU POUR COUSSIN GONFLABLE DE SECURITE

(30) Priorität: 21.12.2005 DE 102005061351
(43) Veröffentlichungstag der Anmeldung: 01.10.2008
(73) Patentinhaber: ITG Automotive Safety Textiles GmbH, 79689 Maulburg (DE)
(72) Erfinder: HUBER, Norbert, 79713 Bad Säckingen (DE)
(74) Vertreter: Wiese, Gerhard
(86) Internationale Anmeldenummer: PCT/EP2006/012405
(87) Internationale Veröffentlichungsnummer: WO 2007/076961

(56) Entgegenhaltungen:
- WO-A-02/070252
- DE-A1- 10 255 360
- US-A- 5 952 250
- US-A- 6 024 380
- US-A1- 2003 060 104
- US-B1- 6 632 753

## Beschreibung

Die vorliegende Erfindung betrifft einen Luftsack, ein Gewebe für einen Luftsack und ein Verfahren zum Herstellen eines gewebten Gewebes für einen Luftsack für Personenrückhaltesysteme für Kraftfahrzeuge.

Beim Entfalten von Luftsäcken für Personenrückhaltesysteme entsteht durch Füllen der Luftsäcke eine Entwicklung der selben "in die dritte Dimension". Hierbei wird die in der zweidimensionalen Konfiguration vorhandene Länge des textilen Hohlkörpers verkürzt. Der aufgeblasene Luftsack wirkt als Barriere zwischen einer Person, die damit abgefangen werden soll und einem Bereich im Inneren des Kraftfahrzeugs. Der textile Hohlkörper des Luftsacks hat in der Regel keine eigene Längs- oder Quersteifigkeit und bildet demzufolge keine sehr stabile Barriere. Insbesondere bei der Entfaltung eines Seiten-Curtain-Airbags entsteht durch die dritte Dimension eine Verkürzung des textilen Hohlkörpers und dadurch eine von der A-Säule bis zur C-Säule eines Kraftfahrzeugs gespannte Barrierewirkung, wobei der textile Hohlkörper nahezu keine eigene Längssteifigkeit hat und demzufolge auch keine stabile Fortsetzung von der Türbrüstung bis zur Dachreling.

Insassenschutzsysteme für Kraftfahrzeuge mit Seiten-Vorhang-Luftsäcken (Seitenirbags), sogenannten Side-Curtain-Bag-Systemen sind so ausgelegt, dass sie nach Entfaltung des Luftsackes den Seitenbereich der Fahrzeugkabine unterhalb der Fenster als Abstützung nutzen, um ein Herausschleudern der Extremitäten eines Fahrzeuginsassen und damit ein erhöhtes Verletzungsrisiko zu vermeiden. Dies hat zur Folge, dass der Seitenairbag größer als für die eigentliche Schutzwirkung erforderlich ausgelegt werden muss und unnötig hohe Material- und Produktionskosten entstehen.

Aus der WO 02/070252 A1 ist ein Luftsack nach dem Oberbegriff des Anspruchs 1 bekannt.

Die Patentschrift US 5,952,250 beschreibt ein unbeschichtetes Gewebe zur Herstellung von Airbags, das aus synthetischen Monofilamenten gewebt ist und dessen Schussfäden einen geringeren Denier als dessen Kettfäden aufweisen.

Die Patentschrift US 6,024,380 offenbart Verfahren zur Herstellung eines Airbags, bei dem ein aus Polyamid-Filamenten gewebtes Gewebe mit niedriger Luftdurchlässigkeit zur Anwendung kommt, wobei die Dicke der Monofilament-Schussfäden geringer ist als die der Monofilament-Kettfäden.

Es wird von der Automobilindustrie eine Verbesserung des Insassenschutzes durch einen Seiten-Curtain-Luftsack gefordert, durch dessen Performance ein Herausschleudern von Insassen bzw. Körperteilen von Insassen bei oder nach einer Kollision eines Kraftfahrzeugs aus der Fahrzeugkabine verhindert wird.

Der Erfindung liegt die Aufgabe zugrunde, einen Luftsack, ein Gewebe für einen Luftsack und ein Verfahren zum Herstellen eines gewebten Gewebes für einen Luftsack für Personenrückhaltesystem für Kraftfahrzeuge vorzuschlagen, bei dem Material - und Produktionskosten verringert werden.

Die Aufgabe wird nunächst gelöst durch einen Luftsack gemäß Anspruch 1, nämlich einen Luftsack für ein Personenrückhaltesystem für ein Kraftfahrzeug, mit einer Oberkante zur Befestigung des Luftsacks im Dachbereich des Kraftfahrzeugs und mit einer Unterkante, mit gewebten Gewebelagen, deren Kettfäden sich im Wesentlichen parallel zur Unterkante erstrecken, der dadurch gekennzeichnet ist, dass die Gewebelagen vollständig oder bereichsweise mit monofilen oder monofilartigen Kettfäden gewebt sind, und der Luftsack durch obere an die Oberkante grenzende Bereiche (EK) mit ersten, multifilen Kettfäden und untere an die Unterkante grenzende Bereiche (ZK) mit zweiten, monofilen oder monofilartigen Kettfäden gekennzeichnet ist. Es ergibt sich eine individuell anpassbare Ausdbildung des Airbags. Wird im oberen Teil des Airbags nicht soviel Wert auf Längssteifigkeit gelegt, dann ist diese Variante von Vorteil. Darüberhinaus können hierbei auch Material- und Produktionskosten ingespart werden.

Damit kann der aus dem Stand der Technik bekannte Nachteil des zu großen Airbags und der damit einhergehenden hohen Kosten vermieden oder zumindest stark verringert werden, weil nun durch die Konstruktion des Airbags mit monofilen oder monofilartigen Kettfäden eine Eigensteifigkeit parallel zur Unterkante erreicht wird, die es ermöglicht, die Höhe und damit das Material sowie die Herstellungskosten des Airbags zu verringern, da nun ein Aufliegen des Airbags an der Türbrüstung unterhalb des Fensters des Kraftfahrzeugs nicht mehr nötig ist. Darüberhinaus muss (wie beim Stand der Technik bisher noch erforderlich) während des Entfaltungsvorgangs die nach innen ragende Türbrüstung nicht mehr passiert werden, d. h. die Entfaltung des Airbags kann ohne Rampe gerade nach unten erfolgen. Ein bisher möglicherweise erfolgender unangenehmer Seitenhieb des Airbags auf den Insassen entfällt. Ein weiterer Vorteil ergibt sich durch den erfindungsgemäßen Airbag dadurch, dass bei einigen Einsatzfällen auf Spannbänder verzichtet werden kann, welche bisher üblicherweise zur Verspannung des Luftsacks zwischen zwei Verankerungspunkten verwendet werden. Aufgrund der Eigensteifigkeit des Luftsacks in Längsrichtung erübrigen sich diese Spannbänder.

In einer weiteren vorteilhaften Weiterbildung der Erfindung ist der Luftsack **dadurch gekennzeichnet, dass** die monofilartigen Kettfäden aus Hybridgarn oder Hybrid-Multifilgarn bestehen, welches wenigstens erste Filamente und zweite Filamente aufweist, wobei die monofilartigen Kettfäden derart behandelt sind, dass die zweiten Filamente durch thermisches, mechanisches oder chemisches Behandeln des Gewebes ihre Filamentstruktur verloren haben, zu einer amorphen Masse geworden sind und die ersten Filamente miteinander verbinden. Dieser Luftsack kann nun noch wesentlich kostengünstiger hergestellt werden, da das Hybridgarn wie ein Multifilgarn mit sämtlichen Vorteilen gegenüber einem steiferen Monofilgarn verwebt werden kann.

Hybridgarn bzw. Hybrid-Multifilgarn ist z. B. aus der DE 102 55 360 A1 bekannt.

In einer weiteren vorteilhaften Weiterbildung der Erfindung ist der Luftsack **dadurch gekennzeichnet, dass** er ein in einem Stück gewebter bzw. OPW - (one-piece-woven) - Luftsack ist. Das hat folgenden Vorteil: Ein OPW-Airbag kommt fertig gewebt von der Webmaschine wogegen ein aus Gewebe genähter Airbag bis zum gleichen Fertigungsgrad wesentlich mehr Verfahrensschritte durchlaufen muss.

Werden Seiten-Curtain-Luftsäcke als OPW-Bags an einer Monofilkette gewebt, bietet sich z. B. eine Kettfertigung nach dem mehrstufigen Zettel-Assemblierverfahren an.

Die Aufgabe wird desweiteren gelöst durch ein Verfahren gemäß Anspruch 5, bei dem als wesentlichstem Merkmal Kettfäden aus Hybridgarn eingesetzt werden, welches erste Filamente und zweite Filamente aufweist, welche nach dem Weben des Gewebes durch thermisches, chemisches oder mechanisches Behandeln des Gewebes derart behandelt werden, dass die zweiten Filamente ihre Filamentstruktur verlieren, zu einer amorphen Masse werden und die ersten Filamente der Hybridkettfäden sich miteinander zu einem Filamentgamkörper verbinden. Hierdurch wird der Insassenschutz durch einen wesentlich längsstabileren Seiten-Curtain-Airbag verbessert. Die beim Einsatz von Monofilkettfäden bekannten Nachteile werden durch Einsatz von Multifilhybridgarnen überwunden. Hierbei lässt sich vorteilhafterweise der Einsatz von Schärketten mit unterschiedlichen Garnzonen realisieren, um im Rahmen einer entsprechenden Konstruktion Fangdomkonstruktionen in Zonen mit Normalgarn zu ermögli chen.

Weitere Vorteile ergeben sich durch die erfindungsgemäße Ausbildung eines Gewebes für einen Luftsack in einer verfestigten Webnaht. Daneben ist eine besondere Kostenersparnis möglich, dadurch dass auf Grund der verringerten Porengröße durch zu amorpher Masse gewordene zweite Filamente eine geringere LD bzw. geringere Luftdurchlässigkeit erreicht wird, was wiederum zu einem geringeren Bedarf an Beschichtungsmaterial respektive zu einer dünneren Beschichtungsschicht führt. Hinsichtlich der möglichen Variation von Konstruktionselementen (Kettschablonen, Webnahtdesign, Fangdome, Tether, Schußfolge) greifen ganz besonders die Vorteile der Flexibilität einer "Bunt-Jacquard-Weberei".

Ein erfindungsgemäßer Seiten-Curtain-Airbag, z. B. hergestellt aus einem nach dem erfindungsgemäßen Verfahren hergestellten Airbaggewebe hat in der Regel die Funktion, sich aus einer im Bereich der Dachreling eines Kraftfahrzeugs angeordneten verstauten Position entlang der Fensterfläche des Kraftfahrzeugs nach unten zu entfalten. Er wird im Zuge und nach dieser Entfaltung von der A-Säule bis zur C-Säule gespannt und schützt dabei den Kopf des Insassen auf dieser Fahrzeugseite sowohl auf dem Vorder- als auch auf dem Rücksitz im Falle eines Seitenaufpralls.

Gemäß der Erfindung wird in einem genähten oder OPW-Luftsack im Wesentlichen senkrecht zur Entfaltungsrichtung, d.h. im Allgemeinen in Längsrichtung, d.h. je nach Fertigungslage des Luftsacks auf der Webmaschine (in Kett- oder Schussrichtung) ein Monofil, ein grobfibrilliges Multifil und / oder ein Hybridgarn, welches nach einer thermischen, mechanischen oder chemischen Behandlung einen monofilartigen Charakter bekommt, eingesetzt. Die genannten Gammaterialienkönnen, ausschließlich oder im Wechsel mit anderen Garnen über die ganze Breite des Airbags eingesetzt werden, was eine flächige Versteifung zur Folge hat, oder nur partiell bzw. bereichsweise, z. B. wie als Band, bevorzugt im Bereich der Unterkante des Luftsacks, die sich beim Entfalten zur Türbrüstung des Kraftfahrzeugs nach unten bewegt, verwendet werden, was die Abstützung des Luftsacks durch die Fahrzeugstruktur ersetzt.

Die Beschreibung spricht von Luftsäcken, Airbags, Seitenairbags und Side-Curtain-Airbags. Im Sinne der Erfindung unterscheiden sich diese Bezeichnungen nicht. Prinzipiell schließen die erfindungsgemäßen Airbags auch auch Frontairbags wie auch Knieairbags ein, die bei einer entsprechenden Konfiguration eines Kraftfahrzeugs (wie z.B. auch eines Busses oder eines Schienenfahrzeugs) zum Einsatz kommen können.

Weitere Merkmale und Vorteile der Erfindung sind den Unteransprüchen zu entnehmen.

Zum leichteren Verständnis der vorliegenden Erfindung wird diese kurz anhand eines Ausführungsbeispiels unter Zuhilfenahme einer Zeichnung beschrieben.
- Fig. 1: zeigt eine schematische Darstellung eines erfindungsgemäßen Seiten-Curtain-Bags in Seitenansicht.
- Fig. 2: zeigt eine schematische Darstellung eines Seitenairbags geschnitten in der Draufsicht.
- Fig. 3: zeigt eine schemantische Schnittzeichnung einer Gewebekonstruktion mit Webnaht.
- Fig. 4: zeigt schematisch ein Hybridgarn vor einer Hitzebehandlung.
- Fig. 5: zeigt schematisch ein Hybridgarn nach einer Hitzebehandlung.

Aufgrund des Umstandes, dass die zur Durchführung des erfindungsgemäßen Verfahrens erforderlichen Maschinen, Einrichtungen, Geräte und Materialien dem Fachmann bekannt sind, werden diese hier im einzelnen nicht besonderes beschrieben oder gar dargestellt.

Die Erfindung ist u.a. dargestellt durch ein Verfahren zum Herstellen eines gewebten Gewebes für einen Luftsack für Personenrückhaltesysteme für Kraftfahrzeuge, das gekennzeichnet ist durch folgende Schritte:

Vorbereiten einer Kettfadenschar aus Kettfäden unterschiedlicher Gamqualitäten, mit ersten Kettfäden und mit in ausgewählten Bereichen der Kettfadenschar angeordneten zweiten Kettfäden aus Hybridgarn, welches erste Filamente und zweite Filamente aufweist, Weben des Gewebes mit wenigstens einer Schussfadenqualität, thermisches, mechanisches oder chemisches Behandeln des Gewebes derart, dass die zweiten Filamente ihre Filamentstruktur verlieren, zu einer amorphen Massen werden und die ersten Filamente miteinander zu einem monofilartigen Filamentgamkörper verbinden.

In einer vorteilhaften Weiterbildung des erfindungsgemäßen Verfahrens weist dieses folgenden weiteren Schritt auf:

Erhitzen des Gewebes auf eine Temperatur, die niedriger ist als der Schmelzpunkt der ersten Filamente und höher ist, als der Schmelzpunkt der zweiten Filamente, wobei der Schmelzpunkt der ersten Filamente höher liegt als der Schmelzpunkt der zweiten Filamente, wobei der Schmelzpunkt der ersten Kettfäden höher liegt als der Schmelzpunkt der zweiten Filamente, Abkühlen des Gewebes auf eine Temperatur, die niedriger ist, als der Schmelzpunkt der zweiten Filamente.

Eine weitere vorteilhafte Ausbildung des erfindungsgemäßen Verfahrens ist durch folgenden Schritt gekennzeichnet:

Kalandern oder Schleudern des Gewebes derart, dass die an der Gewebeoberfläche angelagerten zweiten Filamente aktiviert werden und die ersten Filamente miteinander verbinden. Eine weitere vorteilhafte Ausbildung des erfindungsgemäßen Verfahrens ist durch den Schritt Chemisches Einlösen der zweiten Filamente derart, dass sie die ersten Filamente miteinander verbinden, gekennzeichnet.

In einer weiteren Ausbildung des erfindungsgemäßen Verfahrens werden vorteilhafterweise die Verfahrensschritte thermisches, mechanisches oder chemisches Behandeln kombiniert eingesetzt.

Vorteilhafterweise wird in einer weiteren Fortbildung des erfindungsgemäßen Verfahrens ein in einem Stück gewebter Luftsack oder OPW-Luftsack für Personenrückhaltesysteme für Kraftfahrzeuge hergestellt, dadurch dass er wenigstens teilweise nach einem Verfahren gemäß einem der Ansprüche 1 bis 5 angefertigt wird.

In einer noch weiteren vorteilhaften Fortbildung der Erfindung wird ein gemäß dem beanspruchten Verfahren hergestellter Luftsack in Kraftfahrzeugen zur Verwendung zu Wasser, auf dem Lande oder in der Luft eingesetzt.

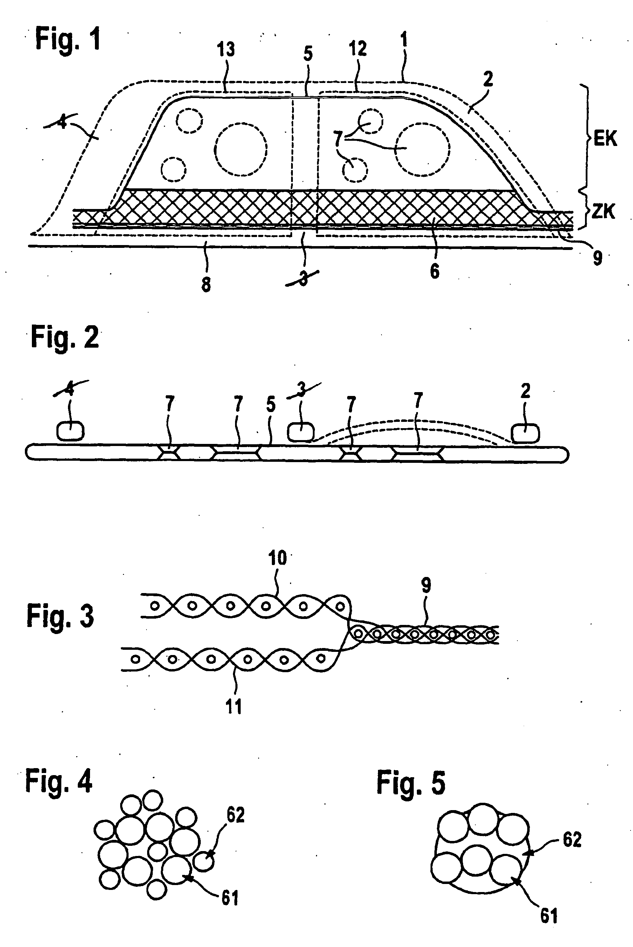

Ein erfindungsgemäßer Luftsack sowie ein gemäß dem erfindungsgemäßen Verfahren hergestelltes Gewebe bzw. ein daraus gefertigter Luftsack - hier in der Form eines in einem Stück gewebten Luftsacks oder OPW-Luftsacks für Personenrückhaltesysteme für Kraftfahrzeuge - wird beispielhaft in Fig. 1 gezeigt. Hierbei ist mit den Strichlinien 1 die Seitenansicht einer Fahrgastzelle eines PKW schematisch dargestellt, wobei man sich vorstellen möge, dass Fig. 1 eine Ansicht von der Mitte des Innenraums des Fahrzeuges nach außen auf die linke Seite darstellt. Das hier dargestellte Fahrzeug würde nach vorwärts zur rechten Seite der Zeichnung fahren. Es sind eine stilisiert dargestellte A-Säule 2, sowie eine stilisiert dargestellte B-Säule und C-Säule zu erkennen. Die eben genannten A-, B- und C-Säulen umranden mit einer Türbrüstung 8 seitliche Fenster 12 und 13. Diese Fenster 12 und 13 werden von einem sich von der A-Säule bis zur C-Säule erstreckenden Curtainbag 5 - hier im entfaltenden Zustand gezeigt - abgedeckt. Der in Fig. 1 dargestellte Seitenairbag 5 besteht aus horizontal verlaufenden ersten Kettfäden, die im Bereich EK eingesetzt sind, und horizontal verlaufenden zweiten Kettfäden, welche im Bereich ZK Verwendung finden. Die zweiten Kettfäden bestehen aus Hybridgarn, welches erste Filamente 61 und zweite Filamente 62 aufweist, die im Hybridgarn gefacht zur Längsachse des Garns verlaufen. Fig. 4 zeigt eine zufällige Schnittdarstellung eines stark vergrößerten Hybridgarns im Schnitt, schematisch, wobei das Garn gefacht zueinander liegende erste Filamente 61, die hier als Kreis mit großen Durchmesser dargestellt sind, enthält und zweite Filamente 62, welche demgegenüber als kleinere Kreise dargestellt sind, enthält.

Der in Fig. 4 dargestellte Schnittzustand eines Hybridgarns zeigt die Situation vor einer Hitzebehandlung. Dagegen zeigt die Darstellung nach Fig. 5 das selbe Hybridgarn nach einer Hitzebehandlung. Man erkennt noch die ersten Filamente 61, vollständig vorhanden, wogegen die zweiten Filamente 62 als solche nicht mehr erkennbar sind, sondern als die ersten Filamente 61 umgebende amorphe Masse, wobei diese Masse, bestehend aus dem Material der zuvor vorhandenen zweiten Filamente 62, die ersten Filamente 61 miteinander vereint. Man beachte, dass die in den Fig. 4 und 5 dargestellten Situationen nur qualitativ und schematisch gemeint sind. Tatsächlich kann es in der Realität völlig anders aussehen. Die Funktionsweise ist jedoch im Prinzip die gleiche.

In einem erfindungsgemäßen Gewebe bzw. einem nach einem erfindungsgemäßen Verfahren hergestellten Gewebe wird in wenigstens einem Fadensystem ganz oder teilweise Hybridgarn eingesetzt. Dieses Hybridgarn besteht aus Filamenten 61 und 62 mit unterschiedlichen Schmelzpunkten T1 und T2. Das heißt, wird das Garnmaterial einer Erhitzung ausgesetzt, die über dem Schmelzpunkt T2 des zweiten Filaments 62 liegt und unterhalb des Schmelzpunktes T1 des Filaments 61 mit dem höheren Schmelzpunkt T1 liegt, dann schmelzen die Filamente 61 im Hybridgarn, wobei die Filamente 61 mit dem hohen Schmelzpunkt T1 erhalten bleiben. Wird das Garnmaterial wieder abgekühlt, erstarren die geschmolzenen Anteile der zweiten Filamente 62 und verbinden die nicht geschmolzenen Filamente 61 miteinander.

Damit kann das frühere Multifilamenthybridgarn, eingesetzt als Kettfaden durch das Miteinander-verkleben der Einzelfilamente 62 einen Monofilcharakter erhalten. Hierdurch ergibt sich die aufgabengemäß angestrebte Erhöhung der Längsstabilität des Seiten-Curtain-Airbags.

Zur Herstellung des erfindungsgemäßen Gewebes wird in der Verarbeitung des Garnmaterials über alle Stufen der Gewebefertigung mit einem Multifilamenthybridgarn gearbeitet, das heißt, die Filamente 62 mit niedrigem Schmelzpunkt T2 liegen im Garn noch als Faser vor. Nach der Gewebefertigung wird dieses einer oben beschriebenen Hitzebehandlung ausgesetzt. Dabei erhalten die eingesetzten Hybridgarne den eben beschriebenen Monofilcharakter. Bei Einsatz des Gewebes als in einem Stück gewebter Airbag oder OPW-Bag bzw. Flachgewebe für genähte Luftsäcke behält dieses im Anwendungsfall als Baukörper auch bei nachlassendem Innendruck seine Längsstabilität.

Die Dimension und Anordnung von längsstabilen Zonen 6 (Fig. 1) kann abhängig vom Design des Seitenairbags gewählt werden.

In Zonen EK in denen sogenannte Fangdome 7 (Fig. 1 und Fig. 2) angebracht werden, bestehen Kette und Schuss aus sogenanntem Normalgarn, einem Garn welches regelmäßig für Seitenairbags Verwendung findet.

Wie bereits oben erwähnt kann die Herstellungsweise nach dem erfindungsgemäßen Verfahren in einer vorteilhaften Weiterbildung die Verbindung zwischen Filamenten des Hybridgarns auch chemisch erzeugt werden. Hierzu werden Oberflächen einer Filamentgruppe der Hybridgarne angelöst und die Fasern dadurch anschließend miteinander verbunden.

In einer weiteren Variante ist auch eine Verbindung der ersten und zweiten Filamente des Hybridgarns auf mechanischem Wege denkbar. Dies wird beispielsweise durch eine Kalander- oder Schleuderbehandlung erreicht, wodurch zum Beispiel auf der Oberfläche angelagerte Klebemittel - analog den zweiten Filamenten 62 - aktiviert werden, welche eine Verbindung der Fasern - analog erste Filamente 61 - miteinander herbeiführen.

In noch einer weiteren Verfahrensvariation können Filamente im Gewebe durch eine mechanische Behandlung zum Beispiel durch einen Kalandrierprozess oder eine Verdichtung mit Wasserstrahl miteinander verpresst oder verbunden werden, so dass Einzelfilamente miteinander einen Monofilcharakter erhalten können.

Die vorteilhafte Kombination der zuvor genannten Verfahren wurde oben bereits hervorgehoben.

Erfindungsgemäß können sich die längsstabilen Zonen 6 eines nach dem erfindungsgemäßen Verfahren hergestellten Airbags auf das gesamte Kettsystem, auf Teilbereiche oder auch auf nur eine Gewebelage beziehen.

Eine in Fig. 3 schematisch im Schnittbild dargestellte horizontale Webnaht 9 - einlagiger Bereich -, hergestellt aus einem Hybridgarn in der Kette hat wegen der gegebenen höheren Fadendichte auch eine höhere Längsstabilität, was hinsichtlich der Problemstellung im Bereich der Türbrüstung eines Kraftfahrzeuges von Vorteil ist.

Fig. 3 zeigt schematisch einen Übergang eines Doppelgewebes in ein einfaches Gewebe - Webnaht 9 - mit im Bereich des Doppelgewebes vorliegendem Obergewebe 10 und Untergewebe 11, wobei die durchgezogenen Linien Schussfäden darstellen und die Kreise sinnbildlich durch die Zeichenebene stoßende Kettfäden darstellen sollen. Erfindungsgemäß erfolgt das Herstellen der Webkette nach dem Sektionalschärverfahren aus Multifilnormal- und Multifilhybridgarn. Der Webprozess unter Einsatz von zwei Bäumen nach der Jacquardtechnologie ist bekannt.

In einer Variante des erfindungsgemäßen Verfahrens wird in Richtung Luftsackhöhe - Vertikalrichtung in Fig. 1 - wie im Stand der Technik bekannt ist, im Schuss ausschließlich Multifilgarn eingesetzt. Damit lässt sich die Faltbarkeit des Curtainbags - dies ist dem Fachmann ebenfalls bekannt - problemlos realisieren. Dennoch kann in einer vorteilhaften Weiterbildung des erfindungsgemäßen Verfahrens auch in Schussrichtung ein Hybridgarn in zuvor beschriebener Art und Weise eingesetzt werden. Dies würde zwar die Faltbarkeit in geringem Masse erschweren, in Richtung der Luftsackhöhe jedoch eine zusätzliche Stabilität bringen.

Gewaschen und getrocknet wird das Gewebe wie aus dem Stand der Technik bekannt. Der abschließende Fixierprozess bewirkt ein Anschmelzen der Niedertemperatur beständigen Filamente und ein gleichzeitiges Verbinden mit den Hochtemperatur beständigen Filamenten in der Kette sowie mit den sie kreuzenden Schussfäden. Hierbei bilden in symmetrischer Ondulation eingebundene Hybridkettfäden Kreuzungspunkte mit elliptischem Querschnitt und erzeugen aufgrund der Anschmelzungen eine besonders elastische Stabilität.

## Patentansprüche

1. Luftsack, insbesondere Seitenairbag für ein Personenrückhaltesystem für ein Kraftfahrzeug, mit einer Oberkante zur Befestigung des Luftsacks im Dachbereich des Kraftfahrzeugs und mit einer Unterkante, mit gewebten Gewebelagen (10, 11), deren Kettfäden sich im Wesentlichen parallel zur Unterkante erstrecken, wobei die Gewebelagen vollständig oder bereichsweise mit monofilen oder monofilartigen Kettfäden gewebt sind, **gekennzeichnet durch** obere an die Oberkante grenzende Bereiche (EK) mit ersten, multifilen Kettfäden und untere an die Unterkante grenzende Bereiche (ZK) mit zweiten, monofilen oder monofilartigen Kettfäden.

2. Luftsack nach Anspruch 1, **dadurch gekennzeichnet, dass** die monofilartigen Kettfäden aus Hybridgarn bestehen, welches wenigstens erste Filamente (61) und zweite Filamente (62) aufweist, wobei die monofilartigen Kettfäden derart behandelt sind, dass die zweiten Filamente durch thermisches, mechanisches oder chemisches Behandeln des Gewebes ihre Filamentstruktur verloren haben, zu einer amorphen Masse geworden sind und die ersten Filamente miteinander verbinden.

3. Luftsack nach Anspruch 1 oder 2, **dadurch gekennzeichnet, dass** er ein in einem Stück gewebter Luftsack ist.

4. Verfahren zum Herstellen eines gewebten Gewebes für einen Luftsack für Personenrückhaltesysteme für Kraftfahrzeuge, insbesondere nach einem der Ansprüche 1 bis 3, **gekennzeichnet durch** folgende Schritte:
a) Vorbereiten einer Kettfadenschar aus Kettfäden unterschiedlicher Garnqualitäten, mit ersten Kettfäden und mit in ausgewählten Bereichen (ZK) der Kettfadenschar angeordneten zweiten Kettfäden aus Hybridgarn, welches erste Filamente (61) und zweite Filamente (62) aufweist,
b) Weben des Gewebes mit wenigstens einer Schussfadenqualität,
c) Thermisches, mechanisches oder chemisches Behandeln des Gewebes derart, dass die zweiten Filamente ihre Filamentstruktur verlieren, zu einer amorphen Masse werden und die ersten Filamente miteinander verbinden.

5. Verfahren nach Anspruch 4, **gekennzeichnet durch** folgende Schritte:
d) Erhitzen des Gewebes auf eine Temperatur, die niedriger ist als der Schmelzpunkt (T1) der ersten Filamente (61) und höher ist als der Schmelzpunkt (T2) der zweiten Filamente (62), wobei der Schmelzpunkt (T1) der ersten Filamente (61) höher liegt als der Schmelzpunkt (T2) der zweiten Filamente (62), wobei der Schmelzpunkt (T3) ersten Kettfäden höher liegt als der Schmelzpunkt (T2) der zweiten Filamente (62),
e) Abkühlen des Gewebes auf eine Temperatur, die niedriger ist als der Schmelzpunkt (T2) der zweiten Filamente (62).

6. Verfahren nach Anspruch 4, **gekennzeichnet durch** folgende Schritte:
f) Kalandern oder Schleudern des Gewebes derart, dass die an der Gewebeoberfläche angelagerten zweiten Filamente aktiviert werden und die ersten Filamente miteinander verbinden.

7. Verfahren nach Anspruch 4, **gekennzeichnet durch** folgende Schritte:
g) Chemisches Anlösen der zweiten Filamente derart, dass sie die ersten Filamente miteinander verbinden.

8. Verfahren nach Anspruch 4, **dadurch gekennzeichnet, dass** die Verfahrensschritte thermisches, mechanisches oder chemisches Behandeln kombiniert eingesetzt werden.

9. Gewebe, **dadurch gekennzeichnet, dass** es nach einem Verfahren gemäß einem der Ansprüche 4 bis 8 hergestellt wurde.

10. Verfahren zum Herstellen eines in einem Stück gewebten Luftsacks für Personenrückhaltesysteme für Kraftfahrzeuge, **gekennzeichnet dadurch, dass** das Gewebe für den Luftsack wenigstens teilweise nach einem Verfahren gemäß einem der Ansprüche 5 bis 10 gebildet wird.

## Claims

1. An airbag, particularly a side airbag for an automotive passenger restraint system, comprising a top edge for securing the airbag to the vehicle roof and a bottom edge with woven fabric plies (10, 11) the warp threads of which extend substantially parallel to the bottom edge, the fabric plies being woven totally or portionally with monofil or monofil-type warp threads, **characterized by** upper portions (EK) bordering the top edge, comprising first multifil warp threads and lower portions (ZK) bordering the bottom edge, comprising second monofil or monofil-type warp threads.

2. The airbag as set forth in claim 1, **characterized in that** the monofil-type warp threads consist of hybrid yarn comprising at least first filaments (61) and second filaments (62), the monofil-type warp threads being treated such that the second filaments have lost their filament structure due to thermal, mechanical or chemical treatment of the fabric in becoming an amorphous mass interconnecting the first filaments.

3. The airbag as set forth in claim 1 or 2, **characterized in that** it is a one-piece woven airbag.

4. A method for producing a woven fabric for an automotive passenger restraint system, particularly as set forth in any of the claims 1 to 3, **characterized by** the following steps:
a) preparing an array of warp threads of differing yarn qualities comprising first warp threads and second warp threads said second warp threads being arranged in selected portions (ZK) of the warp thread array and being of hybrid yarn comprising first filaments (61) and second filaments (62),
b) weaving the fabric with at least one weft thread quality,
c) treating the fabric thermally, mechanically or chemically such that the second filaments loose their filament structure in becoming an amorphous mass interconnecting the first filaments.

5. The method as set forth in claim 4, **characterized by** the following steps:
d) heating the fabric to a temperature which is lower than the melting point (T1) of the first filaments (61) and higher than the melting point (T2) of the second filaments (62), the melting point (T1) of the first filaments (61) being higher than the melting point (T2) of the second filaments (62), the melting point (T3) of the first warp threads being higher than the melting point (T2) of the second filaments (62),
e) cooling the fabric to a temperature which is lower than the melting point (T2) of the second filaments (62).

6. The method as set forth in claim 4, **characterized by** the following steps:
f) calandering or spinning the fabric such that second filaments disposed at the surface of the fabric are activated to interconnect the first filaments.

7. The method as set forth in claim 4, **characterized by** the following steps:
g) chemically activating the second filaments such that they interconnect the first filaments.

8. The method as set forth in claim 4, **characterized in that** the steps in thermal, mechanical or chemical treatment are employed combined.

9. A fabric, **characterized by** it being produced by a method as set forth in any of the claims 4 to 8.

10. A method for producing a one-piece woven airbag for an automotive passenger restraint system **characterized in that** the fabric for the airbag is formed at least in part by a method as set forth in any of the claims 5 to 10.

## Revendications

1. Coussin gonflable de sécurité, notamment un airbag latéral pour un système de retenue de personnes pour un véhicule automobile, comportant un bord supérieur pour la fixation du coussin gonflable de sécurité dans la zone du plafond du véhicule automobile et un bord inférieur comportant des couches de tissu tissées (10, 11) dont les fils de chaîne s'étendent essentiellement en parallèle au bord inférieur, les couches de tissu étant tissées intégralement ou par zone à l'aide de fils de chaîne monofils ou semblables à des monofils, **caractérisé par** des zones (EK) supérieures limitrophes du bord supérieur comportant de premiers fils de chaîne multifils et des zones inférieures limitrophes du bord inférieur (ZK) comportant de seconds fils de chaîne monofils ou semblables à des monofils.

2. Coussin gonflable de sécurité selon la revendication 1, **caractérisé en ce que** les fils de chaîne semblables à des monofils consistent en fil hybride qui présente au moins de premiers filaments (61) et de seconds filaments (62), les fils de chaîne semblables à des monofils étant traités de manière à ce que les seconds filaments ont perdu leur structure de filament par un traitement thermique, mécanique ou chimique du tissu, sont devenus une masse amorphe et relient les premiers filaments entre eux.

3. Coussin gonflable de sécurité selon les revendications 1 ou 2, **caractérisé en ce qu'**il est un coussin gonflable de sécurité tissé d'une pièce.

4. Procédé de fabrication d'un tissu tissé pour un coussin gonflable de sécurité pour des systèmes de retenue de personnes pour véhicules automobiles, notamment d'après les revendications 1 à 3, **caractérisé par** les étapes suivantes:
a) préparer un ensemble de fils de chaîne à partir de fils de chaîne de qualités de fil différentes, comportant de premiers fils de chaîne et, disposés dans des zones (ZK) sélectionnées de l'ensemble de fils de chaîne de seconds fils de chaîne en fil hybride qui comprend de premiers filaments (61) et de seconds filaments (62),
b) tisser le tissu avec au moins une qualité de fil de trame,
c) traiter de manière thermique, mécanique ou chimique le tissu de sorte que les seconds filaments perdent leur structure de filament, deviennent une masse amorphe et relient entre eux les premiers filaments.

5. Procédé selon la revendication 4, **caractérisé par** les étapes suivantes:
d) Réchauffer le tissu à une température qui est inférieure au point de fusion (T1) des premiers filaments (61) et supérieure au point de fusion (T2) des seconds filaments (62), le point de fusion (T1) des premiers filaments (61) étant supérieur au point de fusion (T2) des seconds filaments (62), le point de fusion (T3) des premiers fils de chaîne étant supérieur au point de fusion (T2) des seconds filaments (62),
e) refroidir le tissu à une température qui est inférieure au point de fusion (T2) des seconds filaments (62).

6. Procédé selon la revendication 4, **caractérisé par** les étapes suivantes:
f) calandrer ou essorer le tissu de manière à ce que les seconds filaments déposés à la surface du tissu sont activés et relient entre eux les premiers filaments.

7. Procédé selon la revendication 4, **caractérisé par** les étapes suivantes:
g) chimiquement dissoudre légèrement les seconds filaments de manière à ce qu'ils relient entre eux les premiers filaments.

8. Procédé selon la revendication 4, **caractérisé en ce que** les étapes de procédé de traitement thermique, mécanique ou chimique sont utilisées en combinaison.

9. Tissu, **caractérisé en ce qu'**il est fabriqué d'après le procédé selon l'une quelconque des revendications 4 à 8.

10. Procédé de fabrication d'un coussin gonflable de sécurité tissé d'une pièce pour des systèmes de retenue de personnes pour véhicules automobiles, **caractérisé en ce que** le tissu pour le coussin gonflable de sécurité est formé au moins en partie d'après un procédé selon l'une quelconque des revendications 5 à 10.
